# EUROPEAN PATENT APPLICATION

(11) **EP 0 763 422 A1**
(43) Date of publication of application: **19.03.1997**
(21) Application number: 96114220.5
(22) Date of filing: 05.09.1996
(51) Int. Cl.: B32B 27/32

(54) **Multi-layer shrink film comprising low modulus polypropylene**

(30) Priority: 13.09.1995 US 527610
(71) Applicant: W.R. GRACE & CO.-CONN., Duncan, SC 29334-0464 (US)
(72) Inventor: Shah, Gautam P., Simpsonville, 29681 South Carolina (US)
(74) Representative: De Carli, Elda

(57) **Abstract**

A multilayer film generally includes:
a) an interior layer of polypropylene homopolymer, copolymer, or terpolymer having a tensile modulus of less than or equal to 60,000 pounds per square inch;
b) a first exterior layer of a material selected from the group consisting of polypropylene homopolymer, copolymer, or terpolymer; ethylene/alpha olefin copolymer; ethylene/vinyl acetate copolymer; ethylene/butyl acrylate copolymer; polybutene; and blends of the foregoing materials; and
c) a second exterior layer which may be formed from one or more of the materials recited above for the first exterior layer.

Such multilayer film may be biaxially oriented to produce a high-strength, low-modulus shrink film.

## Description

### Background of the Invention

The present invention relates to heat-shrinkable, thermoplastic packaging films and, more particularly, to those which contain low modulus polypropylene homopolymer, copolymer, or terpolymer in one or more interior layers of the film.

One distinguishing feature of a shrink film is the film's ability, upon exposure to a certain temperature, to shrink, or, if restrained from shrinking, to generate shrink tension within the film. The manufacture of shrink films, as is well known in the art, may be generally accomplished by extrusion of resinous materials which have been heated to their flow or melting point from an extrusion die in tubular or planar form. After cooling the extrudate by quenching, it is reheated to its orientation temperature range. The orientation temperature range for a given film will vary with the different resinous polymers and blends thereof which comprise the film. In general, the orientation temperature may be stated to be above room temperature and below the melting point of the film.

The terms "oriented" and "orientation" are used herein to describe the process and resultant product characteristics obtained by stretching and immediately cooling a resinous polymeric material which has been heated to its orientation temperature range so as to revise the molecular configuration of the material by physical alignment of the molecules to improve mechanical properties of the film such as, for example, shrink tension and orientation release stress. Both of these properties may be measured in accordance with ASTM D 2838-69. When the stretching force is applied in one direction, uniaxial orientation results. When the stretching force is applied in two directions, biaxial orientation results.

The process of stretching a film at its orientation temperature range may be accomplished in a number of ways such as, e.g., by "blown bubble" or "tenter framing" techniques. These and other techniques are well known in the art and involve stretching the film in the cross or transverse direction (TD) and/or in the longitudinal or machine direction (MD). After being stretched, the film is rapidly cooled to quench and thus set or lock-in the oriented molecular configuration. Such an oriented and quenched film is said to be "heat-shrinkable," i.e., the film will tend to return toward its original, unoriented (unstretched) dimensions when subsequently heated to an appropriate temperature below its melting temperature range.

After locking-in the oriented molecular configuration by quenching, the film may be stored in rolls and utilized to tightly package a variety of items. In this regard, the product to be packaged is first enclosed in the heat-shrinkable material by heat sealing the shrink film to itself where necessary to form an enclosure. Thereafter, the enclosed product is subjected to elevated temperatures by, for example, passing the enclosed product through a hot air or hot water tunnel. This causes the film to shrink around the product to produce a tight wrapping that closely conforms to the contour of the product.

The foregoing general outline for manufacturing shrink films is not meant to be all inclusive. Many well-known variations are possible depending upon the end use to which the film is to be put and the characteristics desired to be instilled in the film. For example, it may be desirable to orient a packaging film and thereafter heat-set the film by bringing the oriented film to a temperature near its orientation temperature. This produces a film with substantially less shrinkability, while retaining much of the advantages of orientation, including improved tensile strength and optical properties.

Shrink films desirably provide a wide variety of physical and performance characteristics such as shrink force (the amount of force that a film exerts per unit area of its cross-section during shrinkage), the degree of free shrink (the reduction in linear dimension in a specified direction that a material undergoes when subjected to elevated temperatures while unrestrained), tensile strength (the highest force that can be applied to a unit area of film before it begins to tear apart), sealability, shrink temperature curve (the relationship of shrink to temperature), tear initiation and resistance (the force at which a film will begin to tear and continue to tear), optics (gloss, haze, and transparency of the film), elongation, impact resistance (the ability of the film to withstand stresses that are applied at high speeds), puncture resistance, and high-temperature resistance.

Of particular concern herein are polypropylene-based shrink films, i.e., shrink films which have polypropylene as a major component, particularly in the interior layer or layers of the film. Such films are advantageous in that, relative to other classes of shrink films such as polyethylene-based shrink films, they provide superior high-temperature resistance. That is, polypropylene-based shrink films generally able to withstand higher temperatures than other classes of shrink films without deformation or deterioration. Polypropylene-based shrink films also provide superior tensile strength. Unfortunately, however, polypropylene-based shrink films tend to be stiffer than, e.g., their polyethylene-based counterparts. In many shrink film applications, such stiffness can be undesirable because, in comparison with more flexible shrink films, stiff shrink films tend to have inferior resistance to tear propagation, a lower degree of free shrink for a given temperature, and a lesser degree of elongation.

Accordingly, a need exists in the art for a polypropylene-based shrink-film with improved properties, especially tear resistance, free shrink, and elongation.

### Summary of the Invention

That need is met by the present invention which provides a multilayer film, comprising:
a) an interior layer comprising polypropylene homopolymer, copolymer, or terpolymer having a tensile modulus of less than or equal to 60,000 pounds per square inch;
b) a first exterior layer comprising a material selected from the group consisting of polypropylene homopolymer, copolymer, or terpolymer; a blend of polypropylene homopolymer, copolymer, or terpolymer and a hydrocarbon resin; ethylene/alpha olefin copolymer; ethylene/vinyl acetate copolymer; ethylene/butyl acrylate copolymer; polybutene; and blends of the foregoing materials; and
c) a second exterior layer.

The film is preferably oriented in at least one direction at an orientation ratio ranging from about 2:1 to about 6:1. That is, the film can be uniaxially oriented (stretched in one direction) or, more preferably, biaxially oriented (stretched in two directions which are substantially perpendicular to one another). In this manner, the film will be heat-shrinkable. Most preferably, the orientation ratio of the film ranges from about 2:1 to about 4:1. The inventor has found that the physical properties of the film are optimized when the film is oriented at an orientation ratio falling within that range.

By employing a low-modulus polypropylene in the interior, i.e., one having a tensile modulus of less than or equal to 60,000 pounds per square inch, the multilayer film of the present invention provides the benefits of a polypropylene-based shrink film (high-temperature resistance and tensile strength) in a film having increased flexibility over a conventional polypropylene-based film so that the tear resistance, elongation, and free shrink properties of the present film are such that the film is well suited for use as a shrink-film.

### Definitions

As used herein, the phrase "polypropylene homopolymer, copolymer, or terpolymer" refers to homopolymers, copolymers, and terpolymers, as those terms are conventionally understood, in which propylene is a major constituent (greater than 50% by weight of the polymer). Thus, unless further modified or defined, the phrase "polypropylene homopolymer, copolymer, or terpolymer" encompasses, e.g., isotactic, syndiotactic, and atactic polypropylene; propylene/butene copolymer; propylene/ethylene copolymer; propylene/ethylene/butene terpolymer; etc.

As used herein, the phrase "tensile modulus" refers to the ratio of nominal tensile stress to the corresponding elongation (strain) below the proportional limit of a material. Tensile modulus is tested in accordance with ASTM D882 (when the material is in film form) or ASTM D638 (when the material is in another form such as a dumbell-shaped object), and is distinct from other types of modulus measurements, such as, e.g., secant modulus, compressive modulus, flexural modulus, shear modulus, modulus of resilience, etc.. The tensile modulus of a material can be determined regardless of whether the material has been oriented or is in an unoriented state. However, when used herein in conjunction with the phrase "polypropylene homopolymer, copolymer, or terpolymer having a tensile modulus of less than or equal to 60,000 pounds per square inch," "tensile modulus" refers to the tensile modulus of the polypropylene homopolymer, copolymer, or terpolymer when such homopolymer, copolymer, or terpolymer is in an unoriented state, i.e., prior to subjecting the polypropylene homopolymer, copolymer, or terpolymer to an orientation process as described earlier herein. In all other instances where "tensile modulus" is used herein, that phrase shall have its ordinary meaning as defined above.

As used herein, the term "ethylene/alpha-olefin copolymer" generally designates copolymers of ethylene with one or more comonomers selected from C₃ to C₂₀ alpha-olefins, such as 1-butene, 1-pentene, 1-hexene, 1-octene, methyl pentene and the like, in which the polymer molecules comprise long chains with relatively few side chain branches. These polymers are obtained by low pressure polymerization processes and the side branching which is present will be short compared to non-linear polyethylenes (e.g., LDPE, a polyethylene homopolymer). Ethylene/alpha-olefin copolymers generally have a density in the range of from about 0.86 g/cc to about 0.94 g/cc, and can be said to fall into two general categories, "heterogeneous" and "homogeneous."

Heterogeneous ethylene/alpha-olefin copolymers are ethylene/alpha-olefin copolymerization reaction products of relatively wide variation in molecular weight and composition distribution, and which are prepared using conventional Ziegler-Natta or other heterogeneous catalysts. Examples of heterogeneous ethylene/alpha-olefins include linear low density polyethylene (LLDPE), linear medium density polyethylene (LMDPE), very low density polyethylene (VLDPE), and ultra-low density polyethylene (ULDPE). LLDPE is generally understood to include that group of heterogeneous ethylene/alpha-olefin copolymers which fall into the density range of about 0.915 to about 0.93 g/cc. Linear polyethylene in the density range from about 0.93 to about 0.945 is generally referred to as LMDPE. Lower density heterogeneous ethylene/alpha-olefin copolymers are VLDPE (typically used to refer to the ethylene/butene copolymers available from Union Carbide with a density ranging from about 0.88 to about 0.91 g/cc) and ULDPE (typically used to refer to the ethylene/octene copolymers supplied by Dow).

Homogeneous ethylene/alpha-olefin copolymers are ethylene/alpha-olefin copolymerization reaction products of relatively narrow molecular weight distribution and relatively narrow composition distribution. Homogeneous ethylene/alpha-olefin copolymers are structurally different from heterogeneous ethylene/alpha-olefin copolymers, in that homogeneous ethylene/alpha-olefins exhibit a relatively even sequencing of comonomers within a chain, a mirroring of sequence distribution in all chains, and a similarity of length of all chains, i.e., a narrower molecular weight distribution. Furthermore, homogeneous ethylene/alpha-olefin copolymers are typically prepared using metallocene, or other single-site type catalysts, rather than using Ziegler Natta catalysts. Such single-site catalysts typically have only one type of catalytic site, which is believed to be the basis for the homgeniety of the polymers resulting from the polymerization. A homogeneous ethylene/alpha-olefin copolymer can be prepared by the copolymerization of ethylene and any one or more alpha-olefin, such as a C₃-C₂₀ alpha-monoolefin (e.g., 1-butene, 1-pentene, 1-hexene, and 1-octene). Commercially-available examples of homogeneous ethylene/alpha-olefin copolymers include metallocene-catalyzed EXACT™ linear homogeneous ethylene/alpha-olefin copolymer resins obtainable from the Exxon Chemical Company, of Baytown, Texas; TAFMER™ linear homogeneous ethylene/alpha-olefin copolymer resins obtainable from the Mitsui Petrochemical Corporation; and long-chain branched, metallocene-catalyzed homogeneous ethylene/alpha-olefin copolymers available from The Dow Chemical Company, known as AFFINITY™ resins.

As used herein, the term "hydrocarbon resin" refers to resins made by the polymerization of monomers composed of carbon and hydrogen only. Thermoplastic resins of low molecular weight made from relatively impure monomers derived from coal-tar fractions, petroleum distillates, etc. are also included. A preferred hydrocarbon resin is Regalrez™ 1128 or 1139 from Hercules. A discussion of hydrocarbon resins as defined herein can be found, e.g., in U.S. Patent Nos. 4,921,749; 5,091,237; and 5,128,183.

As used herein, the phrase "interior layer" refers to any layer of a multilayer film having both of its principal surfaces directly adhered to another layer of the film.

As used herein, the phrase "exterior layer" refers to any layer of a multilayer film having only one of its principal surfaces directly adhered to another layer of the film. In the multilayer films of the present invention, there are two exterior layers, each of which has a principal surface adhered to only one other layer of the multilayer film. The other principal surface of each of the two exterior layers form the two principal outer surfaces of the multilayer film.

As used herein, the phrase "orientation ratio" refers to the multiplication product of the extent to which the film material is expanded in any one direction during the orientation process. Thus, an orientation ration of, e.g., 2:1 in the machine direction, indicates that the film has been expanded to twice its original dimension in the machine direction. When a film is biaxially oriented, the orientation ratios are conventionally expressed as "[MD ratio] X [TD ratio]" or "[TD ratio] X [MD ratio]," however designated. Thus, a biaxial orientation ratio of 2:1 in the MD and 3:1 in the TD would be expressed as a "MD X TD orientation ratio of 2:1 X 3:1" or, more simply, "2 X 3."

### Brief Description of the Drawings

Fig. 1 is a schematic cross-section of a three-layer film in accordance with the present invention; and
FIG. 2 is a schematic cross-section of a five-layer film in accordance with the present invention.

### Detailed Description of the Preferred Embodiments

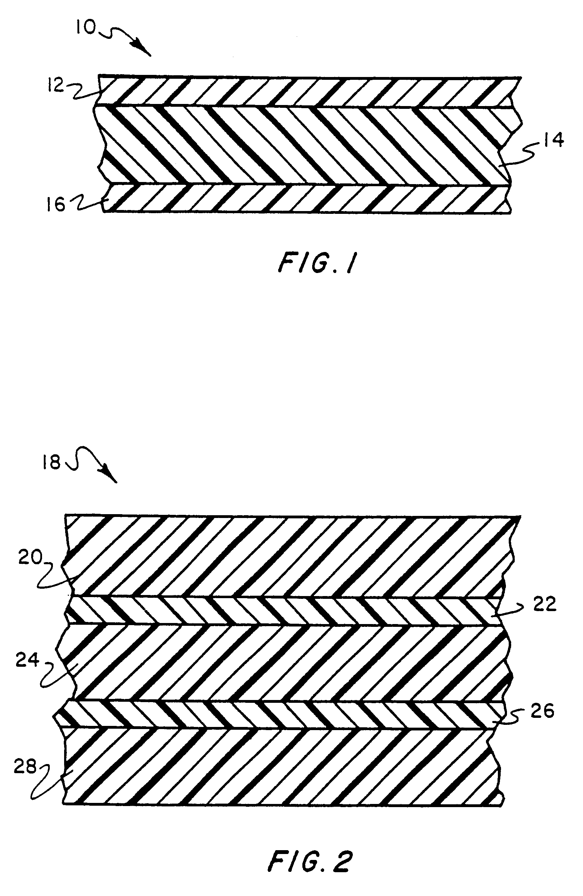

Referring to FIG. 1, a three-layer film 10 in accordance with the present invention is illustrated. Film 10 comprises:
a) an interior layer 14 comprising polypropylene homopolymer, copolymer, or terpolymer having a tensile modulus of less than or equal to 60,000 pounds per square inch (hereinafter referred to as "low-modulus polypropylene");
b) a first exterior layer 12 comprising a material selected from the group consisting of polypropylene homopolymer, copolymer, or terpolymer (e.g., propylene/butene copolymer (PBC), propylene/ethylene copolymer (PEC], propylene/ethylene/butene terpolymer (PEB), and "low-modulus" polypropylene); a blend of polypropylene homopolymer, copolymer, or terpolymer and a hydrocarbon resin; ethylene/alpha olefin copolymer (e.g., linear low density polyethylene (LLDPE), linear medium density polyethylene (LMDPE), homogeneous ethylene/alpha-olefin copolymer, etc.); ethylene/vinyl acetate copolymer (EVA); ethylene/butyl acrylate copolymer (EBA); polybutene (PB); and blends of the foregoing materials; and
c) a second exterior layer 16.

Preferred low-modulus polypropylene materials for use in interior layer 14 include polypropylene homopolymers (PP) and propylene/ethylene copolymers (PEC) which have a tensile modulus of less than or equal to 60,000 psi. Such materials are available from the Rexene Corporation (Dallas, Texas) under the tradename REXFLEX™ FPO. The Rexene PPs and PECs are believed to comprise at least some percentage of atactic (as opposed to isotactic or syndiotactic) polypropylene. Propylene terpolymers, such as propylene/ethylene/butene terpolymers, are also suitable, provided such terpolymers have a tensile modulus of less than or equal to 60,000 psi.

If desired, additional materials may be blended with the low-modulus polypropylene in layer 14. Such materials may include ethylene/alpha-olefin (EAO) copolymer such as, e.g., linear low density polyethylene (LLDPE) and homogeneous EAO copolymer. In addition, polypropylene homopolymer, copolymer, or terpolymer having a tensile modulus of greater than 60,000 pounds per square inch (i.e., "high-modulus polypropylene"), may be blended with the low-modulus polypropylene in layer 14. A hydrocarbon resin may also be blended with the low-modulus polypropylene. Preferably, the low-modulus polypropylene is present in any such blend at a weight percentage of at least 20%, more preferably at least 30%, and most preferably at least 40%, based on the weight of interior layer 14.

Second exterior layer 16 may comprise any suitable material, but preferably is selected from the same group of materials from which first exterior layer 12 is selected, i.e., polypropylene homopolymer, copolymer, or terpolymer; a blend of polypropylene homopolymer, copolymer, or terpolymer and a hydrocarbon resin; ethylene/alpha olefin copolymer; ethylene/vinyl acetate copolymer; ethylene/butyl acrylate copolymer; polybutene; and blends of the foregoing materials. In the most preferred film structures, exterior layers 12 and 16 are formed from the same material.

If desired, additional layers may be added to the three-layer film 10 shown in FIG. 1. For example, one or more additional interior layers may be added to film 10 comprising, e.g., one or more materials selected from the group consisting of polypropylene homopolymer, copolymer, or terpolymer; a blend of polypropylene homopolymer, copolymer, or terpolymer and a hydrocarbon resin; ethylene/alpha olefin copolymer; ethylene/vinyl acetate copolymer; ethylene/butyl acrylate copolymer; polybutene; and blends of the foregoing materials.

In addition to the film structures shown below in the Examples, preferred three-layer films in accordance with the present invention include those in which exterior layers 12 and 16 comprise propylene/ethylene copolymer, propylene/butene copolymer, propylene/ethylene/butene terpolymer, or blends of the foregoing materials, while interior layer 14 comprises low-modulus polypropylene homopolymer or low-modulus propylene/ethylene copolymer blended with one or more of high-modulus propylene/ethylene copolymer, propylene/butene copolymer, or propylene/ethylene/butene terpolymer.

Referring now to FIG. 2, five-layer film 18 in accordance with the present invention is shown. Film 18 comprises:
a) a first interior layer 22, a second interior layer 24, and a third interior layer 26, at least one of the first, second, and third interior layers comprising a low-modulus polypropylene (i.e., polypropylene homopolymer, copolymer, or terpolymer having a tensile modulus of less than or equal to 60,000 pounds psi);
b) a first exterior layer 20; and
c) a second exterior layer 28.

First and second exterior layers 20 and 28 may comprise any of the materials discussed above with regard to exterior layers 12 and 16 of the three-layer embodiment shown in FIG. 1. Similarly, any or all of interior layers 22, 24, and 26 may comprise any of the materials discussed above with regard to interior layer 14, including blending additional materials with the low-modulus polypropylene.

Second interior layer 24 may serve as a "core" layer comprising low-modulus propylene (or a blend thereof with additional materials as discussed above) with first and third interior layers 22 and 26 serving as "intermediate" layers (i.e., intermediate the "core" and exterior layers). In this regard, interior layers 22 and 26 may comprise any suitable material, such as a material selected from the group consisting of polypropylene homopolymer, copolymer, or terpolymer; a blend of polypropylene homopolymer, copolymer, or terpolymer and a hydrocarbon resin; ethylene/alpha olefin copolymer; ethylene/vinyl acetate copolymer; ethylene/butyl acrylate copolymer; polybutene; and blends of the foregoing materials. Alternatively, second interior layer 24 may comprise a material selected from the foregoing group while first and third interior layers 22 and 26 comprise low-modulus polypropylene (or a blend thereof with additional materials).

Preferred five-layer films, having the general structure A/B/C/B/A wherein A=layers 20 and 28, B=layers 22 and 26, and C=layer 24, include the following:
PEC+PP/LMPP/LLDPE/LMPP/PEC+PP
PEC+PP/LMPP+PP/LLDPE/LMPP+PP/PEC+PP
PEC+PP+PB/LLDPE/LMPEC/LLDPE/PEC+PP+PB
PEC+PP/LLDPE/LMPP+PP/LLDPE/PEC+PP
PEC+PP/LMPP+PP/LLDPE/LMPP+PP/PEC+PP.
In the foregoing structures, the abbreviation "LMPP" denotes "low-modulus polypropylene homopolymer and "LMPEC" denotes "low-modulus propylene/ethylene copolymer."

Additional layers may be added to the three- or five-layer films depicted in FIGS. 1 and 2 as desired. For example, oxygen-barrier layers comprising, e.g., ethylene/vinyl alcohol copolymers (EVOH), polyvinylidene copolymers, polyamides as well as copolymers and terpolymers thereof, etc., may be included in the films of the present invention, preferably as additional interior layers. Such films preferably have the general structure A/B/C/D/C/B/A, wherein:
A = (PEC + PP) or (EVA + LLDPE)
B = Low-modulus PP or PEC
C = an adhesive
D = EVOH or nylon copolymer.

Various additives may be used with any or all of the layers of the presently-described films such as, e.g., slip agents, antiblocking agents, antioxidants, processing aids (e.g., silicone mist which is sprayed on freshly-extruded film), silicone compounded or blended into any of the layers, pigments, antistatic agents, antifog agents, etc.

The films of the present invention may be used in various packaging applications, such as with vertical or horizontal "form, fill, and seal" apparatus. Both food and non-food items may be packaged.

In the preferred process for making the multilayer films of the present invention, the basic steps are blending the polymers for the various layers, coextruding the layers to form a multilayer film, and then optionally, but preferably, stretching the film to orient it. These steps and additional desirable steps will be described in the paragraphs which follow.

The process begins by blending the raw materials (i.e., polymeric resin) in the proportions and ranges desired as discussed above for each layer in which a blend is to be used. The resins are usually purchased from a supplier in pellet form and can be blended in any one of a number of commercially-available blenders as is well known in the art. During the blending process any additives and/or agents which are desired to be utilized are also incorporated.

The blended resins, any non-blended resins, and applicable additives and/or agents are then fed into the hoppers of extruders which feed the coextrusion die. For the three-layer film, at least two extruders need to be employed. If each layer is to have a different composition, three extruders are used: two extruders are fed the materials desirable for the first and second exterior layers and the third extruder is fed the low-modulus polypropylene material (or blend) which is desired for utilization in the interior layer. If the exterior layers are to have the same composition, only two extruders are used: one extruder produces the interior layers while the flow from the other extruder can be split to produce both exterior layers. Additional extruders may be employed, if desired.

Preferably, the materials are coextruded and then quenched as a tube having a diameter which is dependent on the racking ratio and desired final diameter. This coextruded tube is relatively thick and is referred to as the "tape." Circular coextrusion dies are well known in the art and can be purchased from a number of manufacturers. In addition to tubular coextrusion, slot dies could be used to coextrude the material in planar form. Well known single or multilayer extrusion coating processes could also be employed if desired. An optional process step is the application of a fine silicone spray to one or both surfaces of the newly extruded tape.

Following coextrusion and quenching to cool, the extruded tape is preferably reheated and continuously inflated by internal air pressure into a bubble, thereby transforming the narrow tape with thick walls into a wide film with thin walls of the desired film thickness. This process is sometimes referred to as the "trapped bubble technique" or as "racking." After passing over the bubble, the now-expanded film-tube passes through a set of rollers which flatten the film and maintain air pressure within the bubble. The film is then wound onto a roll for storage or further processing (e.g., printing).

The racking process as described above orients the film by stretching it transversely and, to some extent, longitudinally, to rearrange the molecules and thus impart shrink capabilities to the film and modify the film's physical characteristics. Additional longitudinal or machine direction stretching may be accomplished by revolving the 'flattening' rollers at a speed greater than that of the rolls which serve to transport the reheated "tape" to the racking or blown bubble area. Tenter framing can also be used. All of these methods of orientation are well known in the art.

If desired, reclaimed film of the present invention can be ground and added into one or more layers of the film of the present invention for the purpose of recycling. In this manner, the ground and reclaimed film would be added to one or more extruders along with "fresh" or "virgin" material during the coextrusion process.

The multilayer films of the present invention are preferably oriented in at least one direction, but more preferably in two directions which are substantially perpendicular to one another (i.e., biaxially oriented). The orientation ratio preferably ranges from about 2:1 to about 6:1. More preferably, the orientation ratio ranges from about 2:1 to about 4:1. Most preferably, the film is biaxially oriented at an orientation ratio of about 3 X 3. The inventor has found that the improvements in film properties which result from the use of low-modulus polypropylene in the interior layer(s) of the film are particularly prominent when the film is biaxially oriented at a ratio ranging from about 2 X 2 to about 4 X 4.

The invention may be further understood by reference to the following examples, which are provided for the purpose of representation, and are not to be construed as limiting the scope the invention.

### EXAMPLES

All of the films used in the examples were coextruded and oriented in accordance with the process described above, and had a layer-thickness ratio of 1/2/1 (i.e., the interior layer was approximately two times thicker than either exterior layer). All percentages are weight percentages unless indicated otherwise.

The materials used in the examples are identified below with their respective abbreviations:
**"LMPP-1":** Low-modulus polypropylene homopolymer having a tensile modulus of 53,000 psi (ASTM D 638), a melt flow index of 1.5 dg/min. at 230°C and 0.6 dg/min. at 190°C (ASTM D 1238), and a density of 0.89 g/cc (ASTM D 1505); obtained from the Rexene Corporation (Dallas, Texas) under the tradename REXFLEX™ FP D 1700.
**"LMPP-2":** Low-modulus polypropylene homopolymer having a tensile modulus of 17,000 psi (ASTM D 638), a melt flow index of 7.7 dg/min. at 230°C and 2.3 dg/min. at 190°C (ASTM D 1238), and a density of 0.89 g/cc (ASTM D 1505); obtained from the Rexene Corporation (Dallas, Texas) under the tradename REXFLEX™ FP D2300.
**"LMPEC-1":** Low-modulus propylene/ethylene copolymer having a tensile modulus of 35,000 psi (ASTM D 638), a melt flow index of 1.1 dg/min. at 230°C and 0.4 dg/min. at 190°C (ASTM D 1238), and a density of 0.88 g/cc (ASTM D 1505); obtained from the Rexene Corporation (Dallas, Texas) under the tradename REXFLEX™ FP D 1800.
**"HMPEC-1":** High-modulus propylene/ethylene copolymer having a melt flow index of 3.5 dg/min. at 230°C (ASTM D 1238), a density of 0.9 g/cc (ASTM D 1505), and a 1% secant modulus* of 50,000 (ASTM D882); obtained from Exxon under the tradename ESCORENE™ PD 9302.
**"HMPEC-2":** High-modulus propylene/ethylene copolymer having a melt flow index of 4.5 dg/min. at 230°C (ASTM D 1238), a density of 0.895 g/cc (ASTM D 1505), and a 1% secant modulus* of 70,000 (ASTM D882); obtained from Fina under the tradename DYPRO™ 8473.
**"HMPP-1":** High-modulus polypropylene homopolymer having a melt flow index of 3.6 dg/min. at 230°C (ASTM D 1238), a density of 0.9 g/cc (ASTM D 1505) and a 1% secant modulus* of 98,000 (ASTM D882); obtained from Exxon under the tradename ESCORENE™ PP 4062.
**"EAO-1":** A homogeneous (i.e., metallocene-catalysed) ethylene/alpha-olefin copolymer having a density of 0.91 g/cc (ASTM D 1505) and a melt flow index of 1.07 dg/min. at 190 °C (ASTM D 1238); obtained from the Dow Chemical Company under the tradename AFFINITY™ FM 1570.
**"EAO-2":** Linear medium density polyethylene (LMDPE); a heterogeneous ethylene/alpha-olefin copolymer having a density of 0.935 g/cc (ASTM D 1505) and a melt flow index of 2.5 dg/min. at 190 °C (ASTM D 1238); obtained from the Dow Chemical Company under the tradename DOWLEX™ 2037.
**"EAO-3":** Linear low density polyethylene (LLDPE); a heterogeneous ethylene/alpha-olefin copolymer having a density of 0.920 g/cc (ASTM D 1505) and a melt flow index of 1.0 dg/min. at 190 °C (ASTM D 1238); obtained from the Dow Chemical Company under the tradename DOWLEX™ 2045.
**"EVA":** Ethylene/vinyl acetate copolymer having a density of 0.924 g/cc (ASTM D 1505) and a melt flow index of 2.0 dg/min. at 190 °C (ASTM D 1238); obtained from the Rexene Corporation under the tradename PE 1335.
**"MB-1":** A polypropylene-based "masterbatch" containing about 90% HMPP-1 and about 10% antiblock and slip agents.
**"MB-2":** An ethylene-based "masterbatch" containing about 91% EAO-2 and about 9% antiblock and slip agents.

*Note: A 1% secant modulus is the ratio of stress to corresponding strain and is determined at a strain of 1% on the stress-strain curve for a even material. Due to the shape of the stress-strain curve, the tensile modulus of a given material will always be greater, usually significantly greater, than the 1% secant modulus of that material.

### Example 1

A multilayer film in accordance with the present invention had the three-layer structure A/B/A, wherein:
A = 92% HMPEC-1 + 8% MB-1
B = 50% HMPP-1 + 50% LMPP-1

The film was approximately was approximately 2 mils thick (1 mil = 0.001 inch) and had an orientation ratio of approximately 3 X 3, i.e., was biaxially oriented in both the machine and transverse directions at orientation ratios of 3:1.

### Example 2

A multilayer film in accordance with the present invention had the three-layer structure A/B/A, wherein:
A = 92% HMPEC-1 + 8% MB-1
B = 50% HMPP-1 + 50% LMPP-2

The film was approximately 2.5 mils thick and had an orientation ratio of approximately 3 X 3.

### Example 3

A multilayer film in accordance with the present invention had the three-layer structure A/B/A, wherein:
A = 90% HMPEC-1 + 10% MB-1
B = 50% HMPP-1 + 50% LMPEC-1

The film was approximately 0.8 - 0.9 mil thick and had an orientation ratio of approximately 5 X 5.

### Example 4

A multilayer film in accordance with the present invention had the three-layer structure A/B/A, wherein:
A = 90% HMPEC-1 + 10% MB-1
B = 50% EAO-1 + 50% LMPP-1

The film was approximately 0.8 - 0.9 mil thick and had an orientation ratio of approximately 5 X 5.

### Example 5

A multilayer film in accordance with the present invention had the three-layer structure A/B/A, wherein:
A = 15.8% EAO-2 + 24.2% EVA + 50% EAO-3 + 10% MB-2
B = 100% LMPP-1

The film was approximately 0.8 - 0.9 mil thick and had an orientation ratio of approximately 5 X 5.

### Example 6

A multilayer film in accordance with the present invention had the three-layer structure A/B/A, wherein:
A = 15.8% EAO-2 + 24.2% EVA + 50% EAO-3 + 10% MB-2
B = 50% HMPP-1 + 50% LMPP-1

The film was approximately 0.8 - 0.9 mil thick and had an orientation ratio of approximately 5 X 5.

### Example 7

A multilayer film in accordance with the present invention had the three-layer structure A/B/A, wherein:
A = 15.8% EAO-2 + 24.2% EVA + 50% EAO-3 + 10% MB-2
B = 50% EAO-3 + 50% LMPP-1

The film was approximately 0.8 - 0.9 mil thick and had an orientation ratio of approximately 5 X 5.

### Example 8

A multilayer film in accordance with the present invention had the three-layer structure A/B/A, wherein:
A = 90% HMPEC-1 + 10% MB-1
B = LMPEC-1

The film was approximately 1.2 mils thick and had an orientation ratio of approximately 3 X 3.

### Example 9

A multilayer film in accordance with the present invention had the three-layer structure A/B/A, wherein:
A = 90% HMPEC-1 + 10% MB-1
B = 50% HMPEC-1 + 50% LMPEC-1

The film was approximately 1.1 mils thick and had an orientation ratio of approximately 3 X 3.

### Example 10

A multilayer film in accordance with the present invention had the three-layer structure A/B/A, wherein:
A = 90% HMPEC-1 + 10% MB-1
B = 50% HMPEC-1 + 50% LMPP-1

The film was approximately 1.1 mils thick and had an orientation ratio of approximately 3 X 3.

### Example 11

A multilayer film in accordance with the present invention had the three-layer structure A/B/A, wherein:
A = 90% HMPEC-1 + 10% MB-1
B = 50% HMPP-1 + 50% LMPP-1

The film was approximately 1.1 mils thick and had an orientation ratio of approximately 3 X 3.

### Example 12

The films of Examples 1-11 were tested for Tensile at Break (psi), Elongation at Break (%), and Tensile Modulus (psi), all in accordance with ASTM D882. The results are summarized below in Table 1. Each of the reported values is an average value obtained from several samples of each film, as tested in both the machine direction (MD) and transverse direction (TD).

**TABLE 1**

| **Film** | **Tensile at Break (psi)** | | **Elongation at Break (%)** | | **Tensile Modulus (psi)** | |
|---|---|---|---|---|---|---|
| Example 1 | MD: | 14,136 | MD: | 221 | MD: | 144,180 |
| | TD: | 12,219 | TD: | 138 | TD: | 165,360 |
| Example 2 | MD: | 12,669 | MD: | 222 | MD: | 131,840 |
| | TD: | 12,502 | TD: | 161 | TD: | 153,320 |
| Example 3 | MD: | 22,847 | MD: | 103 | MD: | 195,400 |
| | TD: | 26,793 | TD: | 86 | TD: | 235,930 |
| Example 4 | MD: | 16,681 | MD: | 103 | MD | 138,770 |
| | TD: | 13,241 | TD: | 98 | TD: | 136,620 |
| Example 5 | MD: | 17,036 | MD: | 111 | MD: | 97,057 |
| | TD: | 16,460 | TD: | 100 | TD: | 102,240 |
| Example 6 | MD: | 16,286 | MD: | 97 | MD: | 141,700 |
| | TD: | 16,838 | TD: | 111 | TD: | 134,800 |
| Example 7 | MD: | 16,641 | MD: | 127 | MD: | 76,694 |
| | TD: | 14,140 | TD: | 108 | TD: | 81,198 |
| Example 8 | MD: | 14,393 | MD: | 215 | MD: | 87,767 |
| | TD: | 12,445 | TD: | 200 | TD: | 93,909 |
| Example 9 | MD: | 14,357 | MD: | 226 | MD: | 105,840 |
| | TD: | 12,375 | TD: | 188 | TD: | 109,710 |
| Example 10 | MD: | 14,460 | MD: | 183 | MD: | 115,550 |
| | TD: | 12,569 | TD: | 154 | TD: | 126,740 |
| Example 11 | MD: | 15,556 | MD: | 150 | MD: | 149,850 |
| | TD: | 14,856 | TD: | 158 | TD: | 158,780 |

### Example 13

The films of Examples 1-11 were tested for Tear Resistance (grams) in accordance with ASTM D 1938. The results are summarized below in Table 2. Each of the reported values is an average value obtained from several samples of each film, as tested in both the machine direction (MD) and transverse direction (TD).

**TABLE 2**

| **Film** | **Tear Resistance (grams)** | |
|---|---|---|
| Example 1 | MD: | 25 |
| | TD: | 23 |
| Example 2 | MD: | 28 |
| | TD: | 26 |
| Example 3 | MD: | 3 |
| | TD: | 3 |
| Example 4 | MD: | 4 |
| | TD: | 6 |
| Example 5 | MD: | 6 |
| | TD: | 5 |
| Example 6 | MD: | 11 |
| | TD: | 6 |
| Example 7 | MD: | 7 |
| | TD: | 8 |
| Example 8 | MD: | 14 |
| | TD: | 18 |
| Example 9 | MD: | 11 |
| | TD: | 12 |
| Example 10 | MD: | 10 |
| | TD: | 12 |
| Example 11 | MD: | 9 |
| | TD: | 12 |

### Example 14

The films of Examples 1-11 were tested for Free Shrink (%) in accordance with ASTM D2732. The results are summarized below in Table 3. Each of the reported values is an average value obtained from several samples of each film, as tested in both the machine direction (MD) and transverse direction (TD) at several different temperatures.

**TABLE 3**

| | **FREE SHRINK (%)** | | | | | | | | | | | |
|---|---|---|---|---|---|---|---|---|---|---|---|---|
| **Film** | **200°F** | | **220°F** | | **240°F** | | **260°F** | | **280°F** | | **300°F** | |
| Ex. 1 | MD: | -- | MD: | 17 | MD: | 27 | MD: | 43 | MD: | 55 | MD: | 60 |
| | TD: | -- | TD: | 21 | TD: | 31 | TD: | 46 | TD: | 58 | TD: | 61 |
| Ex. 2 | MD: | -- | MD: | 13 | MD: | 22 | MD: | 38 | MD: | 55 | MD: | 60 |
| | TD: | -- | TD: | 19 | TD: | 29 | TD: | 44 | TD: | 58 | TD: | 63 |
| Ex. 3 | MD: | 11 | MD: | 15 | MD: | 22 | MD: | 37 | MD: | 52 | MD: | 63 |
| | TD: | 13 | TD: | 19 | TD: | 27 | TD: | 40 | TD: | 56 | TD: | 62 |
| Ex. 4 | MD: | 8 | MD: | 13 | MD: | 25 | MD: | 42 | MD: | 59 | MD: | 69 |
| | TD: | 12 | TD: | 21 | TD: | 37 | TD: | 48 | TD: | 62 | TD: | 69 |
| Ex. 5 | MD: | 15 | MD: | 25 | MD: | 42 | MD: | 50 | MD: | 61 | MD: | 70 |
| | TD: | 21 | TD: | 32 | TD: | 48 | TD: | 55 | TD: | 64 | TD: | 69 |
| Ex. 6 | MD: | 13 | MD: | 21 | MD: | 35 | MD: | 43 | MD: | 54 | MD: | 61 |
| | TD: | 18 | TD: | 27 | TD: | 41 | TD: | 46 | TD: | 56 | TD: | 62 |
| Ex. 7 | MD: | 13 | MD: | 23 | MD: | 47 | MD: | 60 | MD: | 64 | MD: | 69 |
| | TD: | 20 | TD: | 33 | TD: | 56 | TD: | 67 | TD: | 70 | TD: | 73 |
| Ex. 8 | MD: | 21 | MD: | 29 | MD: | 43 | MD: | 55 | MD: | 64 | MD: | 85 |
| | TD: | 23 | TD: | 32 | TD: | 47 | TD: | 60 | TD: | 64 | TD: | 52 |
| Ex. 9 | MD: | 16 | MD: | 25 | MD: | 37 | MD: | 55 | MD: | 60 | MD: | 81 |
| | TD: | 19 | TD: | 30 | TD: | 44 | TD: | 62 | TD: | 64 | TD: | 59 |
| Ex. 10 | MD: | 20 | MD: | 28 | MD: | 44 | MD: | 55 | MD: | 59 | MD: | -- |
| | TD: | 20 | TD: | 31 | TD: | 47 | TD: | 61 | TD: | 63 | TD: | -- |
| Ex. 11 | MD: | 9 | MD: | 16 | MD: | 26 | MD: | 46 | MD: | 51 | MD: | 61 |
| | TD: | 13 | TD: | 22 | TD: | 34 | TD: | 51 | TD: | 60 | TD: | 63 |

### Example 15

The films of Examples 1-11 were tested for Ball Burst Impact (cm-kg) in accordance with ASTM D3420 and Instrumented Impact (lb.) in accordance with ASTM D3763. The results are summarized below in Table 4. Each of the reported values is an average value obtained from several samples of each film.

**TABLE 4**

| **Film** | **Ball Burst Impact (cm-kg)** | **Instrumented Impact (lb.)** |
|---|---|---|
| Example 1 | 17 | 28 |
| Example 2 | 18 | 33 |
| Example 3 | 18 | 21 |
| Example 4 | 12 | 14 |
| Example 5 | 13 | 18 |
| Example 6 | 14 | 19 |
| Example 7 | 15 | 16 |
| Example 8 | 13 | 14 |
| Example 9 | 13 | 14 |
| Example 10 | 12 | 13 |
| Example 11 | 13 | 12 |

### Example 16

The films of Examples 1-11 were tested for the optical properties Haze (%) in accordance with ASTM D 1003, Clarity (%) in accordance with ASTM D 1746, and Gloss (45°) in accordance with ASTM D2457. The results are summarized below in Table 5. Each of the reported values is an average value obtained from several samples of each film.

**TABLE 5**

| **Film** | **Haze (%)** | **Clarity (%)** | **Gloss (45°)** |
|---|---|---|---|
| Example 1 | 4.6 | 64 | 71 |
| Example 2 | 5.9 | 43 | 69 |
| Example 3 | 3.0 | 88 | 84 |
| Example 4 | 4.2 | 29 | 78 |
| Example 5 | 5.2 | 77 | 76 |
| Example 6 | 7.0 | 65 | 69 |
| Example 7 | 5.6 | 65 | 75 |
| Example 8 | 3.1 | 80 | 81 |
| Example 9 | 3.7 | 87 | 75 |
| Example 10 | 3.3 | 86 | 80 |
| Example 11 | 3.5 | 81 | 73 |

Each of the foregoing test results indicate that the films of the present invention, particularly those which are oriented at an orientation ratio ranging from about 2:1 to about 4:1, are well suited for use as shrink films.

While the invention has been described with reference to illustrative examples, those skilled in the art will understand that various modifications may be made to the invention as described without departing from the scope of the claims which follow.

## Claims

1. A multilayer film, comprising:
a) an interior layer comprising polypropylene homopolymer, copolymer, or terpolymer having a tensile modulus of less than or equal to 60,000 pounds per square inch;
b) a first exterior layer comprising a material selected from the group consisting of polypropylene homopolymer, copolymer, or terpolymer; a blend of polypropylene homopolymer, copolymer, or terpolymer and a hydrocarbon resin; ethylene/alpha olefin copolymer; ethylene/vinyl acetate copolymer; ethylene/butyl acrylate copolymer; polybutene; and blends of the foregoing materials; and
c) a second exterior layer.

2. The multilayer film of claim 1, wherein said film is oriented in at least one direction at an orientation ratio ranging from about 2:1 to about 6:1.

3. The multilayer film of claim 2, wherein said orientation ratio ranges from about 2:1 to about 4:1.

4. The multilayer film of claim 1, wherein said interior layer further includes one or more materials selected from the group consisting of ethylene/alpha-olefin copolymer; polypropylene homopolymer, copolymer, or terpolymer having a tensile modulus of greater than 60,000 pounds per square inch; hydrocarbon resin; and blends of the foregoing materials.

5. The multilayer film of claim 4, wherein said polypropylene homopolymer, copolymer, or terpolymer having a tensile modulus of less than or equal to 60,000 pounds per square inch is present in said interior layer at a weight percentage of at least 20%, based on the weight of said interior layer.

6. The multilayer film of claim 1, wherein said second exterior layer comprises a material selected from the group consisting of polypropylene homopolymer, copolymer, or terpolymer; ethylene/alpha olefin copolymer; ethylene/vinyl acetate copolymer; ethylene/butyl acrylate copolymer; polybutene; and blends of the foregoing materials.

7. The multilayer film of claim 1, further including at least one additional interior layer comprising a material selected from the group consisting of polypropylene homopolymer, copolymer, or terpolymer; a blend of polypropylene homopolymer, copolymer, or terpolymer and a hydrocarbon resin; ethylene/alpha olefin copolymer; ethylene/vinyl acetate copolymer; ethylene/butyl acrylate copolymer; polybutene; and blends of the foregoing materials.

8. A package made from the film of claim 1.

9. A multilayer film, comprising:
a) a first interior layer, a second interior layer, and a third interior layer, at least one of said first, second, and third interior layers comprising polypropylene homopolymer, copolymer, or terpolymer having a tensile modulus of less than or equal to 60,000 pounds per square inch;
b) a first exterior layer comprising a material selected from the group consisting of polypropylene homopolymer, copolymer, or terpolymer; a blend of polypropylene homopolymer, copolymer, or terpolymer and a hydrocarbon resin; ethylene/alpha olefin copolymer; ethylene/vinyl acetate copolymer; ethylene/butyl acrylate copolymer; polybutene; and blends of the foregoing materials; and
c) a second exterior layer.

10. The multilayer film of claim 9, wherein at least one of said first, second, and third interior layers comprises a material selected from the group consisting of polypropylene homopolymer, copolymer, or terpolymer; a blend of polypropylene homopolymer, copolymer, or terpolymer and a hydrocarbon resin; ethylene/alpha olefin copolymer; ethylene/vinyl acetate copolymer; ethylene/butyl acrylate copolymer; polybutene; and blends of the foregoing materials.

11. The multilayer film of claim 9, wherein said film is oriented in at least one direction at an orientation ratio ranging from about 2:1 to about 6:1.

12. The multilayer film of claim 11, wherein said orientation ratio ranges from about 2:1 to about 4:1.

13. The multilayer film of claim 9, wherein said polypropylene homopolymer, copolymer, or terpolymer having a tensile modulus of less than or equal to 60,000 pounds per square inch is blended with one or more materials selected from the group consisting of ethylene/alpha-olefin copolymer; polypropylene homopolymer, copolymer, or terpolymer having a tensile modulus of greater than 60,000 pounds per square inch; hydrocarbon resin; and blends of the foregoing materials.

14. The multilayer film of claim 13, wherein said polypropylene homopolymer, copolymer, or terpolymer having a tensile modulus of less than or equal to 60,000 pounds per square inch is present in said blend at a weight percentage of at least 20%.

15. The multilayer film of claim 9, wherein said second exterior layer comprises a material selected from the group consisting of polypropylene homopolymer, copolymer, or terpolymer; ethylene/alpha olefin copolymer; ethylene/vinyl acetate copolymer; ethylene/butyl acrylate copolymer; polybutene; and blends of the foregoing materials.

16. A package made from the film of claim 9.
